# FASCICULE DE BREVET EUROPEEN

(11) **EP 2 867 942 B1**
(45) Date de publication et mention de la délivrance du brevet: **13.05.2020**
(21) Numéro de dépôt: 13765435.6
(22) Date de dépôt: 25.06.2013
(51) Int. Cl.: H01M 10/0562, H01M 6/40, H01M 10/0525, H01M 10/0585, H01M 4/13, H01M 4/139, H01M 4/04

(54) **BATTERIE DE TYPE LITHIUM-ION AVEC UNE CATHODE A POROSITÉ VARIABLE ET PROCÉDÉ CORRESPONDANT**
LITHIUMIONENBATTERIE MIT EINER KATHODE VON VARIABLER DURCHLÄSSIGKEIT UND ENTSPRECHENDES VERFAHREN
LITHIUM-ION BATTERY WITH A CATHODE WITH VARIABLE POROSITY AND CORRESPONDING METHOD

(30) Priorité: 29.06.2012 FR 1201850
(43) Date de publication de la demande: 06.05.2015
(73) Titulaire: Commissariat à l'Énergie Atomique et aux Énergies Alternatives, 75015 Paris (FR)
(72) Inventeur: NIZOU, Sylvain, F-37210 Noizay (FR); LOPEZ, Nicolas, F-38620 Montferrat (FR); ROUCHOU, Jouhaiz, F-38120 Saint Egreve (FR); SECOUARD, Christophe, F-95290 L'isle-adam (FR)
(74) Mandataire: Gevers & Orès
(86) Numéro de dépôt international: PCT/IB2013/055198
(87) Numéro de publication internationale: WO 2014/002002

(56) Documents cités:
- US-A1- 2006 024 579
- US-A1- 2009 011 217
- US-A1- 2011 070 489
- US-A1- 2011 076 567
- US-A1- 2011 168 550

## Description

La présente invention concerne le domaine technique des batteries de type lithium-ion en technologie de couches minces.

Ces batteries sont classiquement constituées d'une pluralité de couches comprenant une partie active, des couches de protection, des couches de collecteur de courant et des films barrière. Elles sont généralement dénommées « *micro-batteries* », dans la mesure où la partie active présente une épaisseur inférieure à 20 µm.

La partie active de la batterie comprend un empilement d'une couche de cathode, d'une couche d'électrolyte et d'une couche d'anode.

Cette partie active peut être obtenue par différents procédés dont des techniques de dépôt en phase vapeur (PVD dans la terminologie anglaise), telles que l'évaporation ou la pulvérisation cathodique.

Le fonctionnement de la batterie est le suivant : pendant sa charge, des ions lithium se déplacent de la cathode vers l'anode tandis que, lors de sa décharge, les ions lithium se déplacent de l'anode vers la cathode.

Les matériaux des couches de cathode, d'électrolyte et d'anode sont choisis en fonction de la tension que l'on souhaite obtenir aux bornes de la batterie et en fonction de l'application envisagée.

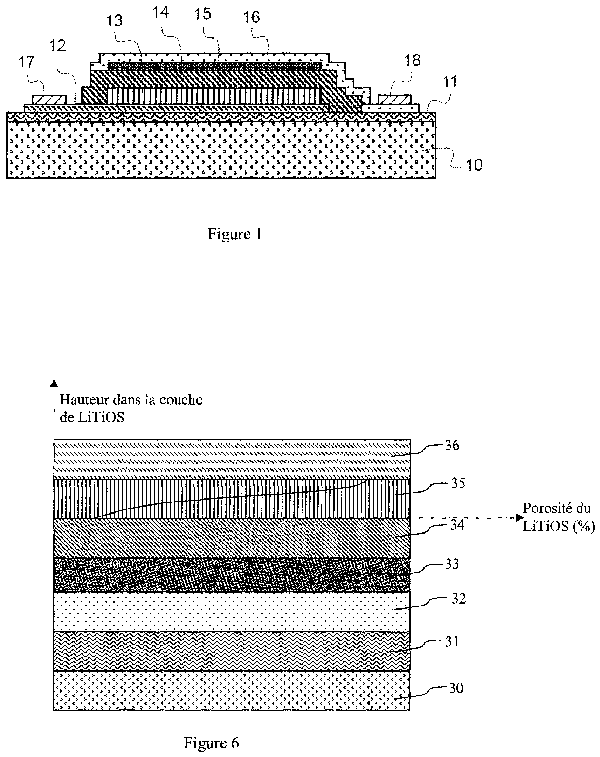

Il est maintenant fait référence à la figure 1 qui illustre schématiquement un exemple de batterie lithium-ion classique. La figure 1 n'illustre qu'une batterie sur le substrat. Bien entendu, c'est une pluralité de batteries qui est classiquement réalisée sur un même substrat. Les batteries sont ensuite découpées, pour être mises en boîtier par exemple.

Ainsi, la batterie est réalisée sur un substrat 10, par exemple en silicium, sur lequel est déposée une couche isolante 11 qui sert de barrière contre la diffusion du lithium. Cette couche 11 peut être par exemple réalisée en nitrure de silicium. Par ailleurs, entre le substrat 10 et la couche barrière 11 peut être prévue une couche en oxyde de silicium. Cette couche facilite l'accroche du nitrure de silicium sur le substrat en silicium.

Sur la couche 11, est formée une couche de collecteur de courant de cathode 12. Cette couche 12 est réalisée en métal, par exemple en titane, en aluminium ou en cuivre.

Le substrat 10 peut être également constitué d'un feuillard métallique, lui-même conducteur électrique assurant simultanément la fonction substrat 10 et la fonction collecteur de courant 12. Un feuillard est une feuille métallique épaisse d'une dizaine de microns.

Sur la couche 12, est formée une couche de cathode 13.

Cette couche 13 est réalisée en un matériau adapté à insérer des ions lithium.

Il peut notamment s'agir d'oxyde de cobalt lithié (LiCoO₂) ou encore d'oxysulfure de titane lithié (LiTiOS).

Dans ce dernier cas, l'épaisseur de la couche 13 est comprise entre quelques centaines de nanomètres à 10 µm.

Ainsi, à titre d'exemple, une couche de TiOS peut être formée en surface de la couche 12 de collecteur de courant de cathode, un film mince de lithium étant ensuite déposé sur la couche de TiOS par un procédé de dépôt en phase vapeur. Le lithium diffuse ensuite naturellement dans la couche de TiOS qui est transformée en une couche de LiTiOS.

Un autre procédé est décrit dans le document EP-2 320 502, selon lequel l'insertion d'ions lithium est obtenue à partir de lithium déposé sur la couche d'anode. C'est la présence d'un court-circuit entre les couches d'anode et de cathode qui permet la migration du lithium et la pénétration des ions Li+ dans la couche de cathode. Les couches d'anode et de cathode sont séparées une fois que la migration du lithium est terminée.

Sur la couche de cathode 13, est déposée une couche d'électrolyte 14.

Le matériau utilisé peut être un électrolyte solide, par exemple l'oxynitrure double de phosphore et de lithium (LiPON). En effet, l'utilisation d'un électrolyte solide présente de nombreux avantages, tels que la possibilité d'utiliser du lithium métallique pour réaliser la couche d'anode et de faire fonctionner la batterie à des températures élevées.

L'épaisseur de cette couche 14 est comprise entre quelques centaines de nanomètres et plusieurs microns.

Une couche d'anode 15 est ensuite formée sur la couche d'électrolyte 14.

Cette couche 15 peut notamment être constituée en silicium, germanium ou lithium.

Le silicium et le germanium sont des matériaux ayant la particularité de voir leur conductivité électronique augmenter sous l'influence des ions lithium qui les traversent lors du fonctionnement de la batterie. En effet, les ions lithium s'allient transitoirement avec le silicium ou le germanium.

Cette couche d'anode 15 peut présenter une épaisseur comprise entre quelques dizaines de nanomètres à 10 µm.

La partie active de la batterie est constituée par l'empilement des couches 13 à 15.

Sur la couche 15 est ensuite déposée une couche de collecteur de courant d'anode 16.

Cette couche 16 peut être réalisée à partir de métal, comme le titane, l'aluminium ou le cuivre.

Enfin, des plots de contact 17 et 18 sont formés sur des couches 12 et 16.

L'empilement des couches 11 à 16 peut être encapsulé avec des matériaux ou des assemblages de matériaux permettant d'éviter le contact entre cet empilement et l'eau, ou encore l'oxygène.

Ces matériaux ne sont pas illustrés sur la figure 1.

De façon classique, les matériaux qui constituent la partie active de la batterie sont déposés de façon à présenter des caractéristiques sensiblement uniformes sur l'ensemble de leur volume ou de leur épaisseur.

Il s'agit notamment de leur composition chimique.

A cet égard, on peut se référer à l'article « Characterization of all-solid-state Li/LiPONB/TiOS microbatteries produced at the pilot scale » de B. Fleutot et al., Journal of Power Sources 196 (2011) 10289-10296. Cet article mentionne notamment que la composition chimique de la couche de TiOS présente une composition uniforme sur toute l'épaisseur des échantillons. Ceci est établi par des analyses spectroscopiques.

Par ailleurs, ces matériaux présentent une isotropie morphologique.

Ceci signifie que la porosité, ou encore la densité des matériaux, est sensiblement la même dans toute l'épaisseur de la couche concernée.

Enfin, chacun de ces matériaux présente des caractéristiques mécaniques, thermiques et électriques qui lui sont propres.

Or, lors des phases de charge et de décharge de la batterie, des contraintes mécaniques fortes sont générées entre les matériaux de la partie active de la batterie du fait de la migration des ions Li+, mais également au niveau de leur interface avec le collecteur de courant de cathode ou le collecteur de courant d'anode.

Dans la mesure où les matériaux de la batterie présentent des caractéristiques mécaniques différentes, ils peuvent se dégrader voire se désolidariser les uns des autres, sous l'effet des cycles répétés de la batterie.

Ces détériorations de la batterie peuvent conduire à son disfonctionnement complet après quelques cycles.

Il convient encore de noter que la morphologie des matériaux peut également avoir une influence sur les performances de la batterie.

En effet, la performance d'une batterie ne se mesure pas seulement selon sa cyclabilité, c'est-à-dire le nombre de cycles de charge et de décharge pouvant être réalisé par la batterie. Il est également important que la batterie présente une capacité importante.

Or, à titre d'exemple, si l'on considère une cathode réalisée en TiOS associé à des ions lithium, la morphologie de la couche de TiOS formée avant l'apport des ions lithium a un effet sur ses propriétés électrochimiques.

Ainsi, une couche de TiOS présentant une densité donnée peut accepter une plus grande quantité d'ions lithium qu'une couche de TiOS dont la densité serait plus faible. Une batterie voit donc sa capacité augmenter lorsque la cathode est réalisée à partir d'une couche de TiOS plus dense.

De plus, une couche de TiOS présentant une densité donnée peut présenter une meilleure cyclabilité qu'une couche de TiOS dont la densité serait plus importante, l'augmentation de la densité étant synonyme d'augmentation du stress mécanique de la couche de TiOS. Ainsi, une batterie voit sa cyclabilité augmenter lorsque la cathode est réalisée à partir d'une couche de TiOS plus poreuse car elle est plus apte à assumer les contraintes mécaniques induites par le cyclage de la batterie.

Les solutions retenues aujourd'hui résultent donc de compromis entre la capacité et la cyclabilité et ne sont pas satisfaisantes. D'autres batteries de l'art antérieur sont connues de US2011/0070489 ou US2006/0024579.

L'invention a pour objet de pallier ces inconvénients en proposant une batterie présentant à la fois une capacité élevée et une excellente cyclabilité.

Pour cela, la solution retenue par les inventeurs est de réaliser la couche de cathode de la batterie, de façon à ce qu'elle ne présente pas la même morphologie, ou encore la même porosité, au niveau de son interface avec le collecteur de courant de cathode et au niveau de son interface avec la couche d'électrolyte.

Ainsi, cette solution s'écarte de celles classiquement retenues et qui se basent sur une isotropie morphologique des couches actives de la batterie.

L'invention concerne donc une batterie de type lithium-ion en couches minces comprenant, sur un substrat, une couche de collecteur de courant de cathode et une partie active constituée d'un empilement d'une couche de cathode en un matériau susceptible d'insérer des ions lithium, une couche d'électrolyte, ladite couche d'électrolyte étant en LiPON, LiSiCON, LiSON ou NaSiCON, et une couche d'anode, dans lequel la couche de cathode présente, selon son épaisseur, une porosité variable entre son interface avec la couche de collecteur de courant de cathode et son interface avec la couche d'électrolyte, la porosité au niveau de l'interface avec la couche d'électrolyte étant différente de la porosité au niveau de l'interface avec la couche de collecteur de courant de cathode.

Cette variation non nulle de la porosité au sein de la couche de cathode permet d'améliorer la cohésion au niveau des deux interfaces et à la fois la capacité et la cyclabilité de la batterie.

En effet, elle permet d'ajuster la porosité de la couche de cathode de façon à accroitre son affinité mécanique avec les matériaux situés à ses interfaces. Elle permet également d'augmenter la densité du matériau constitutif de la couche de cathode, dans certaines régions, sans compromettre la robustesse des interfaces entre les matériaux constitutifs de la couche active. Cette augmentation de la densité contribue à augmenter la capacité de la batterie.

La porosité dans l'épaisseur de la couche de cathode est comprise entre 0 et 70% et, de préférence, entre 0 et 50%.

Dans un premier mode de réalisation, la variation de la porosité est discontinue.

Selon un autre mode de réalisation, la variation de la porosité est continue.

Dans une forme particulière de réalisation de la batterie, la couche de collecteur de courant de cathode est réalisée en titane, la couche de cathode en TiOS associé à des ions lithium et la couche d'électrolyte en LiPON.

Dans ce cas, la porosité de la couche de cathode est plus importante au niveau de l'interface entre la couche de cathode et la couche de collecteur de courant de cathode qu'au niveau de l'interface entre la couche de cathode et la couche d'électrolyte.

L'invention concerne également un procédé de réalisation d'une batterie de type lithium-ion en couches minces comprenant, sur un substrat, une couche de collecteur de courant de cathode et une partie active constituée d'un empilement d'une couche de cathode en un matériau susceptible d'insérer des ions lithium, une couche d'électrolyte, ladite couche d'électrolyte étant en LiPON, LiSiCON, LiSON ou NaSiCON, et une couche d'anode, dans lequel la couche de cathode est obtenue à partir d'un dépôt d'un matériau sur la couche de collecteur de courant de cathode ou d'électrolyte, au moins un paramètre de la technique de dépôt mise en oeuvre étant modifié entre le début et la fin des opérations de dépôt, de façon à ce que la couche de cathode présente, selon son épaisseur, une porosité variable entre son interface avec la couche de collecteur de courant de cathode et son interface avec la couche d'électrolyte, la variation de la porosité étant non nulle.

Dans le cas d'un dépôt en phase vapeur, ledit au moins un paramètre est pris parmi la température du substrat et la vitesse de dépôt.

Dans un premier mode de mise en oeuvre, ledit au moins un paramètre est modifié au moins une fois lors des opérations de dépôt.

Dans un autre mode de mise en oeuvre de ce procédé, ledit au moins un paramètre est modifié de façon continue lors des opérations de dépôt.

L'invention sera mieux comprise et d'autres buts, avantages et caractéristiques de celle-ci apparaîtront plus clairement à la lecture de la description qui suit et qui est faite au regard des dessins annexés, sur lesquels :
- les figures 2 et 3 sont des photographies d'empilements illustrant les constats des inventeurs,
- les figures 4a à 4c sont des vues en coupe illustrant schématiquement des étapes d'un procédé de fabrication d'une batterie lithium-ion selon l'invention,
- la figure 5 est une photographie d'un empilement réalisé conformément au procédé selon l'invention, et
- la figure 6 illustre schématiquement une variante de mise en oeuvre du procédé illustré aux figures 4a à 4c.

De façon générale, les inventeurs se sont attachés à comprendre les phénomènes intervenant aux interfaces entre les matériaux constitutifs de la partie active de la batterie, c'est-à-dire les matériaux constitutifs de la couche de cathode, de la couche d'électrolyte et de la couche d'anode, ainsi qu'aux interfaces entre ces matériaux et les matériaux constitutifs des collecteurs de courant d'anode et de cathode.

Ils se sont plus particulièrement intéressés aux interfaces entre les couches de collecteur de courant de cathode, de cathode et d'électrolyte, et aux matériaux constitutifs suivants : le titane pour la couche de collecteur de courant de cathode, le TiOS pour la couche de cathode et le LiPON pour la couche d'électrolyte.

Il a ainsi été réalisé des couches de cathode à base de TiOS présentant des porosités, ou encore des densités, différentes selon leurs modes de fabrication.

De façon générale, la porosité est mesurée grâce d'une part, à la prise d'image d'une tranche de l'empilement observée par microscopie optique et d'autre part, par un traitement de cette image.

Ce traitement de l'image par seuillage de contraste ou de couleur permet de déterminer précisément le taux de vide du matériau en fonction de la zone observée.

Ces traitements de l'image, aussi appelés segmentation ou détermination des fractions de phase ou fraction volumique, permettent de réaliser ces mesures de porosité en différents points de l'épaisseur de la couche.

Ces traitements sont réalisés par des logiciels généralement fournis par les fabricants de microscopes optiques (par exemple sous les dénominations Analysis ou Spip).

Des empilements ont été réalisés, comportant successivement un substrat en silicium, une couche de SiO₂ de 100 nm, une couche en nitrure de silicium de 100 nm formant une couche barrière pour le lithium, une couche de collecteur de courant de cathode en titane de 250 nm, une couche de cathode en TiOS de 1 µm déposée par pulvérisation cathodique, une couche de lithium déposée par évaporation et une couche d'électrolyte en LiPON de 1,4 µm déposée par pulvérisation cathodique. Ces empilements ne comportent donc pas de couche d'anode, ni de couche de collecteur de courant d'anode.

Dans les deux empilements, la couche en TiOS a ainsi reçu le lithium directement et avant le dépôt de la couche de LiPON. Le lithium diffuse dans la couche de TiOS et la couche d'anode est donc en LiTiOS.

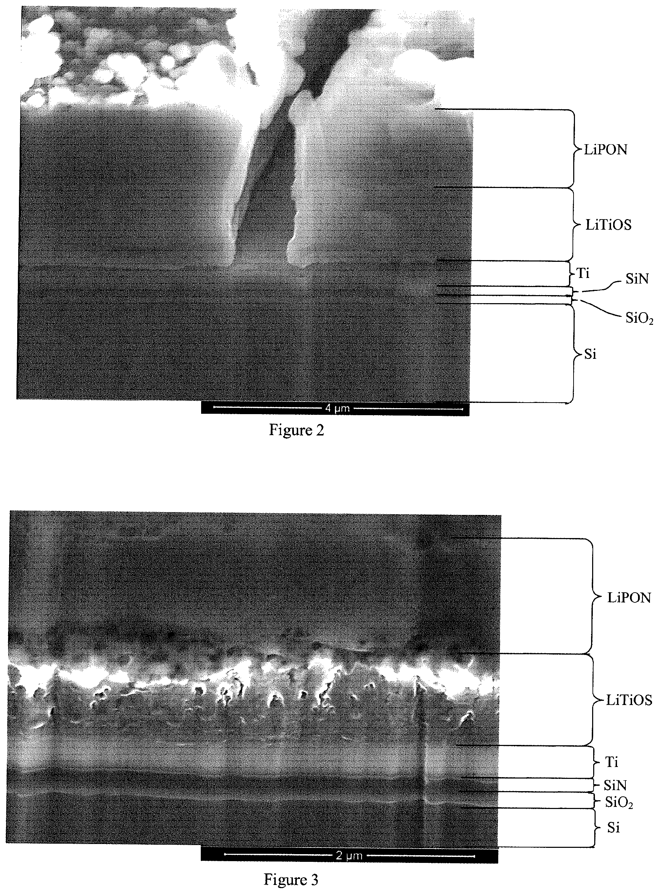

Ainsi, les figures 2 et 3 illustrent, vus en coupe, deux empilements de ce type qui ont été coupés par un procédé d'ablation par faisceau ionique (FIB=Focused Ion Beam) et photographiés par microscopie électronique.

Les échelles correspondant à ces deux figures sont différentes et sont directement indiquées sur les figures.

Dans l'empilement illustré à la figure 2, le LiTiOS de la couche de cathode présente une densité plus importante que dans la couche correspondante de l'empilement illustré à la figure 3.

Le dépôt de la couche de TiOS a été effectué par un procédé de dépôt physique en phase vapeur, à une température de 100°C pour l'empilement de la figure 2 et à une température de 150°C pour l'empilement de la figure 3.

Ce dépôt de TiOS est réalisé par pulvérisation cathodique magnétron d'une cible de titane par un plasma d'argon, d'hydroxyde de soufre et d'oxygène, le seul paramètre modifié entre les deux empilements étant la température du substrat. Cette technique de pulvérisation cathodique en atmosphère réactive est notamment décrite dans le document « Pulvérisation cathodique magnétron » de A. Billard et F. Perry paru dans les Techniques de l'Ingénieur.

Ainsi, la pression est comprise entre 1 et 5 mTorr et par exemple égale à 3 mTorr.

Le débit d'argon est compris entre 20 et 50 sccm et par exemple égal à 30 sccm, le débit d'oxygène est compris entre 0,1 et 3 sccm et par exemple égal à 0,8 sccm et le débit de H₂S est compris entre 30 et 70 sccm et par exemple égal à 50 sccm.

Le débit d'argon backside est de 20 sccm et la pression backside est de 8 Torr.

La puissance est comprise entre 2 et 3 W/cm² et par exemple égale à 2,8 W/cm² et la vitesse de dépôt est de 30 nm/min.

La porosité de la couche de LiTiOS est de 0% dans l'empilement de la figure 2 et de 10% dans l'empilement de la figure 3.

Ainsi, seules les conditions d'obtention de la couche de LiTiOS sont différentes entre les deux empilements. Les épaisseurs des différentes couches sont les mêmes dans les deux empilements.

La figure 2 montre que la couche de LiTiOS adhère très mal à la couche de titane sous-jacente. En effet, la figure 2 montre que la couche de LiTiOS se décolle de la couche de titane et que, de surcroît, des fissures apparaissent dans la couche de LiTiOS.

Par contre, la figure 2 montre une adhésion parfaite entre la couche de LiTiOS et la couche de LiPON. Cette cohésion entre les deux couches de LiTiOS et de LiPON existe même à proximité des fissures au niveau de ces deux couches.

La figure 3 montre, quant à elle, que la couche de LiTiOS adhère parfaitement à la couche de titane. Une cohésion peut être constatée à l'interface entre ces deux couches.

Par contre, l'examen de l'interface entre la couche d'électrolyte en LiPON et la couche en LiTiOS montre une mauvaise cohésion à l'interface entre ces deux couches. Les caractéristiques mécaniques des deux matériaux étant différentes, l'adhésion du LiTiOS au LiPON est de mauvaise qualité, tant sur le plan mécanique que sur le plan des échanges ioniques.

Ainsi, les travaux des inventeurs ont révélé qu'une couche de cathode réalisée en LiTiOS présentant une porosité donnée adhérait mieux à une couche de collecteur de courant d'anode en titane et moins bien à une couche d'électrolyte en LiPON qu'une couche de LiTiOS présentant une porosité plus faible. Cette dernière adhère moins bien à une couche de collecteur de courant d'anode en titane et mieux à une couche d'électrolyte en LiPON.

Il convient encore de noter que ces observations sont identiques lorsque la couche de cathode en TiOS a été lithiée après le dépôt de la couche d'électrolyte en LiPON.

Ces constats font donc apparaître les difficultés à obtenir une bonne adhésion entre la couche de cathode et la couche de collecteur de courant de cathode d'une part, et la couche d'électrolyte d'autre part, lorsque la porosité de la couche de cathode est uniforme sur toute son épaisseur.

Ainsi, le choix d'une porosité présentant une valeur moyenne dans toute l'épaisseur de la couche de cathode permet d'obtenir une adhésion convenable au niveau des interfaces entre la couche de cathode et d'une part, la couche de collecteur de courant d'anode et d'autre part, la couche d'électrolyte.

Cette valeur uniforme moyenne résulte d'un compromis choisi pour réaliser des batteries fonctionnelles, présentant une cyclabilité satisfaisante.

Cependant, cette valeur uniforme moyenne ne permet pas d'optimiser les adhésions au niveau des interfaces et donc la cyclabilité de la batterie.

Il convient encore de rappeler que la porosité d'une couche de cathode en TiOS a des effets sur ses propriétés électrochimiques.

Ainsi, une couche de TiOS plus dense peut accepter une plus grande quantité d'ions lithium qu'une couche de TiOS plus poreuse. Une batterie comportant une couche de TiOS plus dense présentera donc une capacité plus importante. Par contre, cette couche de TiOS plus dense présentera une moins bonne adhésion avec une couche de collecteur de courant de cathode en titane qu'une couche de TiOS plus poreuse. La batterie correspondante présentera donc une moins bonne cyclabilité.

Sur la base de ces constats, la solution proposée par l'invention est de réaliser une couche de cathode en un matériau poreux et présentant une porosité variable dans son épaisseur entre son interface avec la couche de collecteur de courant de cathode et son interface avec la couche d'électrolyte. Ce matériau pourra être en TiOS notamment.

Ainsi, la porosité de la couche de cathode au niveau de l'interface avec la couche d'électrolyte présente une valeur qui est strictement différente (inférieure) de celle de la porosité au niveau de l'interface avec la couche de collecteur de courant de cathode. La variation de la porosité n'est donc pas nulle. On peut estimer qu'elle est au minimum de 5%.

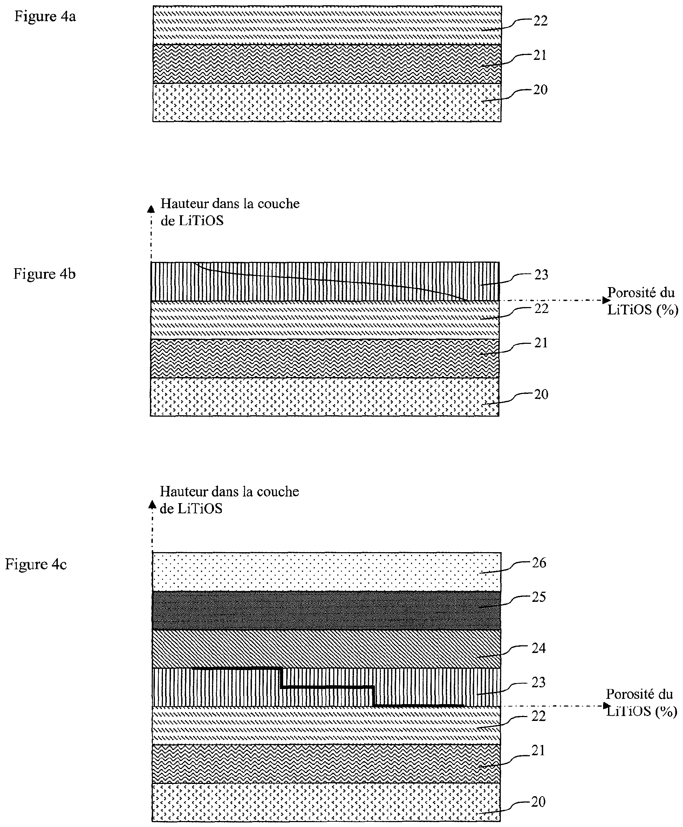

Il est maintenant fait référence aux figures 4a et 4b qui illustrent les premières étapes d'un procédé permettant d'obtenir une batterie selon l'invention. Ces figures n'illustrent que partiellement la batterie en cours de réalisation et font apparaître les différentes couches constitutives.

Ainsi, au regard de la figure 4a, la batterie sera réalisée sur un substrat 20, par exemple en silicium, en surface duquel est formée une couche isolante 21, par exemple en nitrure de silicium. Cette couche peut notamment être déposée par une technique du type dépôt chimique en phase vapeur assisté par plasma (PECVD dans la terminologie anglaise) ou dépôt chimique en phase vapeur, pression sous-atmosphérique (LPCVD dans la terminologie anglaise). Dans les exemples illustrés aux figures 2 et 3, cette couche isolante est formée d'un empilement d'une couche de SiO₂, en contact avec le substrat en silicium et d'une couche de nitrure de silicium en contact avec cette couche de SiO₂.

Sur cette couche barrière ou isolante 21, est formée une couche 22 qui est une couche de collecteur de courant de cathode. Cette couche 22 est notamment réalisée en titane. C'est le cas dans les deux exemples illustrés aux figures 2 et 3.

Les étapes décrites en référence à la figure 4a sont réalisées de façon classique. On peut notamment se référer aux procédés et conditions de mise en oeuvre décrits au regard des figures 2 et 3.

La figure 4b illustre une autre étape du procédé qui est spécifique à l'invention. Dans cette étape du procédé, va être déposée une couche 23 correspondant à une couche de cathode. Dans l'exemple illustré aux figures 2 et 3, cette couche de cathode est réalisée en TiOS.

Cette couche de TiOS peut être obtenue à partir de différents procédés tels qu'une technique de dépôt en phase vapeur (Physical Vapor Déposition ou PVD dans la terminologie anglaise). Il peut notamment s'agir d'une technique de dépôt mettant en oeuvre un faisceau laser pulsé (Pulsed Laser Déposition ou PLD dans la terminologie anglaise) ou encore de dépôt chimique en phase vapeur (Chemical Vapor Déposition ou CVD dans la terminologie anglaise). Des exemples de cette dernière technique sont notamment des techniques de dépôt en phase vapeur à basse pression (LPCVD dans la terminologie anglaise), une technique de dépôt chimique en phase vapeur assisté par plasma (PECVD dans la terminologie anglaise) ou encore une technique de dépôt chimique en phase vapeur utilisant des composés organiques avec un atome métallique comme précurseur (MOCVD dans la terminologie anglaise).

Dans un procédé de dépôt en phase vapeur, certains paramètres de mise en œuvre du procédé permettent d'ajuster la porosité ou encore la densité de la couche de TiOS.

Ces paramètres sont notamment la température du substrat sur lequel la batterie est réalisée ainsi que la vitesse de dépôt du TiOS.

A titre d'exemple, la vitesse de dépôt du TiOS sur le substrat peut varier entre 1 et 20 /s. Par ailleurs, la température du substrat peut varier entre la température ambiante et 300°C.

Il convient de noter que la vitesse de dépôt dans le cadre d'une chambre PVD peut être modifiée en ajustant la pression de la chambre PVD et/ou la puissance de la source (plasma).

Toujours dans le cas d'une technique de dépôt en phase vapeur, on peut souligner qu'il est plus facile de modifier la vitesse de dépôt que la température. En effet, la modification de la vitesse de dépôt peut être réalisée rapidement et elle est bien contrôlée. Ce n'est pas toujours le cas de la température, compte tenu de la forte inertie du porte-substrat ou de la chambre de dépôt.

Ces deux paramètres de fonctionnement sont typiques d'une technique de dépôt en phase vapeur. D'autres paramètres pourraient être retenus pour des procédés de dépôt différents. Ainsi, pour un procédé de dépôt par laser pulsé (PLD dans la terminologie anglaise), la puissance de la source laser ou la fréquence de pulsation du laser sont des paramètres susceptibles de modifier la porosité de la couche de TiOS.

De façon générale, une diminution de la température du substrat lors du dépôt conduit au dépôt d'un TiOS plus dense.

Par ailleurs, une diminution de la vitesse de dépôt conduit également au dépôt d'un TiOS plus dense.

Un exemple de mise en œuvre d'un procédé de dépôt en phase vapeur, dans le cadre de l'invention, est donné ci-après.

Les conditions de mise en oeuvre du procédé sont les mêmes que celles indiquées pour les empilements des figures 2 et 3, sauf en ce qui concerne la température.

En effet, la température du substrat est modifiée de façon continue pendant la durée du dépôt, depuis une valeur de 150°C jusqu'à une température de 100°C.

Une autre méthode pour obtenir cette morphologie aurait pû consister à faire varier la vitesse de dépôt par un ajustement de la puissance source de 2000 W en début de procédé à 1000 W en fin de procédé.

Dans le cadre de cet exemple, l'épaisseur de la couche de TiOS obtenue est de 1 µm.

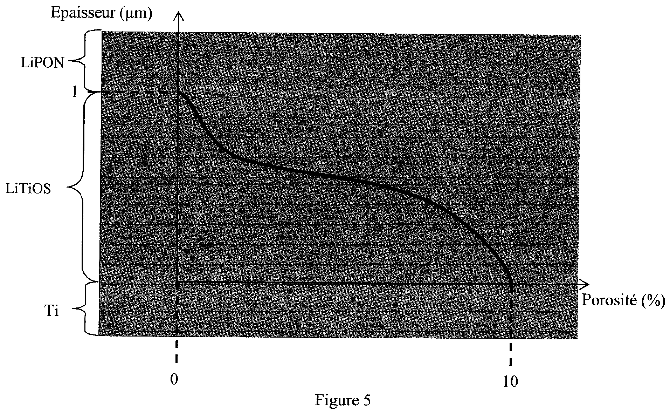

Les analyses effectuées montrent que la porosité de la couche de TiOS varie de manière continue depuis son interface avec la couche de titane, jusqu'à sa surface libre. Cela sera montré en référence à la figure 5.

Sur la figure 4b, est illustrée de manière schématique l'évolution de la porosité selon la hauteur de la couche de TiOS. La porosité de cette couche de TiOS est comprise entre 0 et 70% et, de préférence, entre 0 et 50%.

Comme l'illustre la figure 4c, une fois la couche 23 en TiOS réalisée, une couche de lithium (non illustrée) est déposée sur la couche 23. Après diffusion du lithium, cette couche 23 sera formée de LiTiOS. Sur cette dernière, est déposée une couche d'électrolyte 24 en LiPON.

Sur cette couche 24, est ensuite déposée une couche d'anode 25 puis une couche de collecteur de courant d'anode 26.

Ces couches sont réalisées de manière classique. On peut notamment se référer aux procédés et conditions de mise en œuvre décrits en référence aux figures 2 et 3. De plus, la couche d'anode 25 peut être réalisée en silicium et la couche de collecteur de courant d'anode 26 en titane.

Il convient de noter que l'invention pourrait être mise en oeuvre en utilisant d'autres matériaux que le LiPON pour réaliser la couche d'électrolyte et d'autres matériaux que le titane pour réaliser la couche de collecteur de courant de cathode.

Ainsi, un électrolyte solide peut notamment être en LiPON, LiSiCON, LiSON ou NaSiCON.

Il est fait référence à la figure 5 qui illustre, en vue partielle en coupe, un empilement obtenu par le procédé qui vient d'être décrit.

L'examen de l'interface entre la couche de LiTiOS et d'une part, la couche de titane, et d'autre part, la couche de LiPON, montre dans les deux cas, une très bonne adhésion entre les deux couches concernées.

Par ailleurs, est indiquée sur la figure 5, la courbe montrant l'évolution de la porosité en fonction de l'épaisseur de la couche de LiTiOS.

En comparant par exemple la figure 5 à la figure 2, on constate que l'augmentation de la porosité dans l'épaisseur de la couche de LiTiOS permet d'obtenir une bonne adhésion de la couche de LiTiOS sur la couche de Ti.

Ainsi, avec le type de profil de porosité illustré à la figure 4b ou à la figure 5, la batterie obtenue optimise l'adhésion de la couche de TiOS à la fois sur la couche de titane et la couche de LiPON. Ceci favorise les performances de la batterie en termes de cyclabilité.

Par ailleurs, compte tenu de ces contraintes d'adhésion au niveau des interfaces, la densité moyenne de la couche de TiOS est optimisée. Ceci permet également d'optimiser la capacité de la batterie.

Ceci est d'autant plus vrai avec l'exemple illustré à la figure 5, dans lequel la densité du LiTiOS augmente rapidement dans l'épaisseur de la couche.

Le procédé selon l'invention permet donc d'optimiser à la fois la cyclabilité et la capacité, en évitant les compromis classiquement imposés dans les batteries connues.

L'exemple de mise en oeuvre du procédé selon l'invention qui vient d'être décrit prévoit une variation continue d'un des paramètres, ici la température du substrat ou la vitesse de dépôt, pendant la durée du dépôt.

Le procédé selon l'invention n'est pas limité à ce mode de mise en œuvre. Ainsi, un des paramètres du procédé pourrait être modifié par paliers lors des opérations de dépôt.

En d'autres termes, comme l'illustre à titre d'exemple la figure 4c, la porosité dans la couche 23 pourrait varier par paliers, de façon à former schématiquement une succession de créneaux.

Sur la figure 4c, trois paliers différents sont illustrés. L'invention n'est pas limitée à ce mode de réalisation. Il convient qu'un des paramètres de mise en œuvre du procédé soit modifié au moins une fois, de façon à obtenir une courbe de porosité présentant au moins deux paliers.

On peut également prévoir une multiplicité de paliers. Dans ce cas, il sera difficile d'identifier des paliers au sein de la couche 23 et on pourra considérer que la variation de la porosité est sensiblement continue.

De façon préférée, au moins un des paramètres du procédé est modifié au moins deux fois lors des opérations de dépôt. Ceci semble utile pour éviter des problèmes mécaniques voire électrochimiques à l'interface entre deux couches de TiOS présentant des densités différentes.

Bien entendu, lorsque la porosité varie de façon sensiblement continue, ce risque est éliminé.

De plus, ce n'est pas nécessairement le même paramètre qui sera modifié tout le long des opérations de dépôt.

Il est maintenant fait référence à la figure 6 qui illustre une variante d'une batterie selon l'invention.

La batterie est réalisée sur un substrat 30, par exemple en silicium, en surface duquel est formée une couche isolante 31, par exemple en nitrure de silicium.

Sur cette couche barrière 31, est formée une couche 32 qui est une couche de collecteur de courant d'anode. Cette couche 32 est notamment réalisée en titane.

Sur cette couche 32, est formée une couche d'anode 33, par exemple en silicium et, sur cette couche 33, est formée une couche 34 d'électrolyte, notamment en LiPON.

Le procédé selon l'invention est là encore mis en œuvre pour faire varier la porosité de la couche de cathode 35 qui est ensuite déposée sur la couche 34.

Comme indiqué précédemment, cette couche 35 peut notamment être réalisée en TiOS.

Ainsi, lors du dépôt de cette couche, un des paramètres du procédé mis en oeuvre sera modifié par paliers ou de façon continue.

Si l'on met en oeuvre une technique de dépôt en phase vapeur, on pourra par exemple choisir de modifier la température du substrat 30 ou encore la vitesse de dépôt.

Comme indiqué précédemment, la vitesse de dépôt et la température du substrat varient dans le même sens que la porosité.

A titre d'exemple, la température du substrat sera modifiée de façon continue pendant la durée du dépôt, depuis une température de 100°C jusqu'à une température de 150°C.

Une couche de lithium (non illustrée) est ensuite déposée sur la couche 35. Après diffusion du lithium, cette couche 35 sera formée de LiTiOS.

Une couche de collecteur de courant de cathode 36 est ensuite déposée sur la couche 35. Elle est notamment réalisée en titane.

La couche de TiOS obtenue présentera alors une porosité qui augmente depuis l'interface entre la couche 35 de TiOS et la couche 34 en LiPON, jusqu'à l'interface entre la couche 35 en TiOS et la couche 36 de collecteur de courant de cathode en titane, déposée sur la couche de TiOS.

Là encore, le procédé selon l'invention, permettra d'optimiser à la fois la cyclabilité de la batterie obtenue et sa capacité.

Les signes de référence figurant dans les revendications ont pour seul but de faciliter leur compréhension et ne sauraient en limiter la portée.

## Revendications

1. Batterie de type lithium-ion en couches minces comprenant, sur un substrat (20, 30), une couche de collecteur de courant de cathode (22, 36) et une partie active constituée d'un empilement d'une couche de cathode (23, 35) en un matériau susceptible d'insérer des ions lithium, une couche d'électrolyte (24, 34), ladite couche d'électrolyte étant en LiPON, LiSiCON, LiSON ou NaSiCON, et une couche d'anode (25, 33), dans lequel la couche de cathode présente, selon son épaisseur, une porosité variable entre son interface avec la couche de collecteur de courant de cathode et son interface avec la couche d'électrolyte, la variation de la porosité étant non nulle de façon à améliorer la cohésion au niveau des deux interfaces.

2. Batterie selon la revendication 1, dans laquelle la porosité de la couche de cathode est comprise entre 0 et 70% et, de préférence entre 0 et 50%.

3. Batterie selon la revendication 1 ou 2, dans laquelle la variation de la porosité est discontinue.

4. Batterie selon la revendication 1 ou 2, dans laquelle la variation de la porosité est continue.

5. Batterie selon l'une des revendications 1 à 4, dans laquelle la couche de collecteur de courant de cathode (22, 36) est réalisée en titane, la couche de cathode (23, 35) en TiOS associé à des ions lithium et la couche d'électrolyte (24, 34) en LiPON.

6. Batterie selon l'une des revendications 1 à 5, dans laquelle la porosité de la couche de cathode (23, 35) est plus importante au niveau de l'interface entre la couche de cathode (23, 35) et la couche de collecteur de courant de cathode (22, 36) qu'au niveau de l'interface entre la couche de cathode (23, 35) et la couche d'électrolyte (24, 34).

7. Procédé de réalisation d'une batterie du type lithium-ion en couches minces comprenant, sur un substrat (20, 30), une couche de collecteur de courant de cathode (22, 36) et une partie active constituée d'un empilement d'une couche de cathode (23, 35) en un matériau susceptible d'insérer des ions lithium, une couche d'électrolyte (24, 34), ladite couche d'électrolyte étant en LiPON, LiSiCON, LiSON ou NaSiCON, et une couche d'anode (25, 33), dans lequel la couche de cathode (23, 35) est obtenue à partir d'un dépôt d'un matériau sur la couche de collecteur de courant de cathode (22) ou d'électrolyte (34), au moins un paramètre de la technique de dépôt mise en oeuvre étant modifié entre le début et la fin des opérations de dépôt, de façon à ce que la couche de cathode présente, selon son épaisseur, une porosité variable entre son interface avec la couche de collecteur de courant de cathode et son interface avec la couche d'électrolyte, la variation de la porosité étant non nulle, de façon à améliorer la cohésion au niveau des deux interfaces.

8. Procédé selon la revendication 7, dans lequel la technique mise en oeuvre est une technique de dépôt en phase vapeur, ledit au moins un paramètre étant pris parmi la température du substrat et la vitesse de dépôt.

9. Procédé selon la revendication 8, dans lequel la vitesse de dépôt est contrôlée par ajustement de la puissance source et/ou de la pression de la chambre de dépôt.

10. Procédé selon la revendication 7 ou 8, dans lequel ledit au moins un paramètre est modifié au moins une fois lors des opérations de dépôt.

11. Procédé selon la revendication 7 ou 8, dans lequel ledit au moins un paramètre est modifié de façon continue los des opérations de dépôt.

12. Procédé selon la revendication 7 ou 8, dans lequel ledit au moins un paramètre est modifié par paliers lors des opérations de dépôt.

## Patentansprüche

1. Batterie des Typs Lithium-lonen in dünnen Schichten, auf einem Substrat (20, 30) Folgendes umfassend: eine Kathodenstromkollektorschicht (22, 36) und einen aktiven Teil, der aus einem Stapel aus einer Kathodenschicht (23, 35) aus einem Material, in welches Lithium-lonen eingelagert werden können, einer Elektrolytschicht (24, 34), wobei die Elektrolytschicht aus LiPON, LiSiCON, LiSON und NaSiCON besteht, und einer Anodenschicht (25, 33) besteht, wobei die Kathodenschicht gemäß ihrer Dicke eine variable Durchlässigkeit zwischen ihrer Schnittstelle mit der Kathodenstromkollektorschicht und ihrer Schnittstelle mit der Elektrolytschicht aufweist, wobei die Schwankung der Durchlässigkeit nicht null ist, um so die Kohäsion im Bereich der beiden Schnittstellen zu verbessern.

2. Batterie nach Anspruch 1, wobei die Durchlässigkeit der Kathodenschicht zwischen 0 und 70 %, bevorzugt zwischen 0 und 50 %, umfasst.

3. Batterie nach Anspruch 1 oder 2, wobei die Schwankung der Durchlässigkeit diskontinuierlich ist.

4. Batterie nach Anspruch 1 oder 2, wobei die Schwankung der Durchlässigkeit kontinuierlich ist.

5. Batterie nach einem der Ansprüche 1 bis 4, wobei die Kathodenstromkollektorschicht (22, 36) aus Titan, die Kathodenschicht (23, 35) aus TiOS zusammen mit Lithium-lonen und die Elektrolytschicht (24, 34) aus LiPON gefertigt ist.

6. Batterie nach einem der Ansprüche 1 bis 5, wobei die Durchlässigkeit der Kathodenschicht (23, 35) im Bereich der Schnittstelle zwischen der Kathodenschicht (23, 35) und der Kathodenstromkollektorschicht (22, 36) stärker ist als im Bereich der Schnittstelle zwischen der Kathodenschicht (23, 35) und der Elektrolytschicht (24, 34).

7. Verfahren zur Herstellung einer Batterie des Typs Lithium-Ionen in dünnen Schichten, auf einem Substrat (20, 30) Folgendes umfassend: eine Kathodenstromkollektorschicht (22, 36) und einen aktiven Teil, der aus einem Stapel aus einer Kathodenschicht (23, 35) aus einem Material, in welches Lithium-lonen eingelagert werden können, einer Elektrolytschicht (24, 34), wobei die Elektrolytschicht aus LiPON, LiSiCON, LiSON und NaSiCON besteht, und einer Anodenschicht (25, 33), wobei die Kathodenschicht (23, 35) durch das Abscheiden eines Materials auf die Kathodenstromkollektorschicht (22) oder die Elektrolytschicht (34) erreicht wird, wobei mindestens ein Parameter der verwendeten Abscheidungstechnik zwischen dem Beginn und dem Ende des Abscheidungsvorgangs so geändert wird, dass die Kathodenschicht gemäß ihrer Dicke eine variable Durchlässigkeit zwischen ihrer Schnittstelle mit der Kathodenstromkollektorschicht und ihrer Schnittstelle mit der Elektrolytschicht aufweist, wobei die Schwankung der Durchlässigkeit nicht null ist, um so die Kohäsion im Bereich der beiden Schnittstellen zu verbessern.

8. Verfahren nach Anspruch 7, wobei die verwendete Technik eine Dampfabscheidungstechnik ist, wobei mindestens ein Parameter aus der Temperatur des Substrats und der Geschwindigkeit des Abscheidens gemessen wird.

9. Verfahren nach Anspruch 8, wobei die Geschwindigkeit des Abscheidens durch Anpassung der Leistung der Quelle und/oder des Drucks in der Abscheidungskammer gesteuert wird.

10. Verfahren nach Anspruch 7 oder 8, wobei der mindestens eine Parameter mindestens einmal beim Abscheidungsvorgang geändert wird.

11. Verfahren nach Anspruch 7 oder 8, wobei der mindestens eine Parameter kontinuierlich beim Abscheidungsvorgang geändert wird.

12. Verfahren nach Anspruch 7 oder 8, wobei der mindestens eine Parameter stufenweise beim Abscheidungsvorgang geändert wird.

## Claims

1. Thin layer lithium-ion type battery comprising, on a substrate (20, 30), a cathode current collector layer (22, 36) and an active portion constituted by a stack of a cathode layer (23, 35) made of material suitable for inserting lithium ions, an electrolyte layer (24, 34), said electrolyte layer being made of LiPON, LiSiCON, LiSON or NaSiCON, and an anode layer (25, 33), wherein the cathode layer presents, across its thickness, porosity that varies between its interface with the cathode current collector layer and its interface with the electrolyte layer, the variation in the porosity being non-zero so as to improve cohesion at both interfaces.

2. Battery according to claim 1, wherein the porosity of the cathode layer lies in the range 0 to 70%, and preferably in the range 0 to 50%.

3. Battery according to claim 1 or claim 2, wherein the variation in the porosity is discontinuous.

4. Battery according to claim 1 or claim 2, wherein the variation in the porosity is continuous.

5. Battery according to any one of claims 1 to 4, wherein the cathode current collector layer (22, 36) is made of titanium, the cathode layer (23, 35) is made of TiOS associated with lithium ions, and the electrolyte layer (24, 34) is made of LiPON.

6. Battery according to any one of claims 1 to 5, wherein the porosity of the cathode layer (23, 35) is greater at the interface between the cathode layer (23, 35) and the cathode current collector layer (22, 36) than at the interface between the cathode layer (23, 35) and the electrolyte layer (24, 34).

7. Method of making a thin layer lithium-ion type battery comprising, on a substrate (20, 30), a cathode current collector layer (22, 36) and an active portion constituted by a stack of a cathode layer (23, 35) made of material suitable for inserting lithium ions, an electrolyte layer (24, 34), said electrolyte layer being made of LiPON, LiSiCON, LiSON or NaSiCON, and an anode layer (25, 33), wherein the cathode layer (23, 35) is obtained by depositing a material on the cathode current collector layer (22) or on the electrolyte layer (34), at least one parameter of the deposition technique used being modified between the beginning and the end of deposition operations so that the cathode layer presents, across its thickness, porosity that varies between its interface with the cathode current collector layer and its interface with the electrolyte layer, the variation in the porosity being non-zero, so as to improve cohesion at both interfaces.

8. Method according to claim 7, wherein the technique used is a physical vapor deposition technique, said at least one parameter being selected from the temperature of the substrate and the deposition rate.

9. Method according to claim 8, wherein the deposition rate is controlled by adjusting the power source and/or the pressure of the deposition chamber.

10. Method according to claim 7 or claim 8, wherein said at least one parameter is modified at least once during the deposition operations.

11. Method according to claim 7 or claim 8, wherein said at least one parameter is modified continuously during the deposition operations.

12. Method according to claim 7 or claim 8, wherein said at least one parameter is modified in stages during the deposition operations.
